(19) Europäisches Patentamt
European Patent Office
Office européen des brevets

(11) **EP 3 327 092 B1**

(12) **EUROPEAN PATENT SPECIFICATION**

(45) Date of publication and mention
of the grant of the patent:
**04.11.2020 Bulletin 2020/45**

(51) Int Cl.:
***C09D 11/00*** *(2014.01)*

(21) Application number: **16020473.1**

(22) Date of filing: **29.11.2016**

(54) **TRANSPARENT MATT INK FOR THE PROTECTION OF CERAMIC COATINGS**

TRANSPARENTE MATTE TINTE ZUM SCHUTZ VON KERAMISCHEN BESCHICHTUNGEN

ENCRE MATE TRANSPARENTE POUR LA PROTECTION DE REVÊTEMENTS CÉRAMIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.05.2018 Bulletin 2018/22**

(73) Proprietor: **Sociedad Anónima Minera
Catalano-Aragonesa
50001 Zaragoza (ES)**

(72) Inventors:
• **Caballero López, Miguel Ángel
50001 Zaragoza (ES)**
• **Pérez Aparicio, Joaquin Javier
50001 Zaragoza (ES)**

• **Navarro Pérez, Sandra
50001 Zaragoza (ES)**
• **Alós Collado, Ana
50001 Zaragoza (ES)**
• **Reverter Ibáñez, Silvia
50001 Zaragoza (ES)**

(74) Representative: **Schäfer, Matthias W.
Patentanwalt
Schwanseestrasse 43
81549 München (DE)**

(56) References cited:
**EP-A1- 2 918 560          CN-A- 105 254 339
KR-A- 20030 050 568**

## Description

### Technical area

The present invention lies within the field of materials for the ceramics industry, in particular, special inks intended for application in the industrial ceramics industry, for both ceramic tiles and structural and sanitary ceramics, with the aim of obtaining a transparent matt coating, resistant to abrasion, that protects decorations with coloured inks.

### Definitions

Particle size distribution (PSD), either of a powder, a granular product or particles dispersed in a liquid, is a series of values that defines the relative amount, typically by mass or volume, of the particles present, ordered according to their size.

d(v,n), generally expressed as Dn%, is a group of parameters that allows a given PSD to be characterised and it is defined as the equivalent diameter of a particle where an amount n (expressed on a per unit basis), or n% (expressed as a percentage), of the volume of the control sample has an equivalent diameter that is less than the said value. For example: a value of d(v,0.50) = 0.80 $\mu$m, also expressed as D50 = 0.80 $\mu$m would correspond to the median of the PSD, in which 50% of the volume of the control sample would have an equivalent diameter of less than 0.80$\mu$m.

Distribution width, $W_{PSD}$ is a value which gives us a measurement of the degree of spread of the data around the median. It is calculated according to the following expression:

$$W_{PSD} = \frac{d(v, 0.90) - d(v, 0.10)}{d(v, 0.50)} (1)$$

d(v, 0.97), also expressed as D97, is the parameter that is normally used as the upper bound of the PSD of suspensions and powders.

Resolution. In inkjet terminology, this term refers to the definition obtained in printing, that is, the number of dots printed per unit of length, usually expressed in dots per inch (dpi). Most of the printheads used in ceramic decoration have a resolution capacity of between 300 and 400 dpi. Logically, the resolution in a transverse direction to the printing direction or native resolution is fixed (and depends on the printhead used), while the longitudinal resolution (i.e. that which is obtained in the printing direction of the of the piece) can be varied as desired, depending on the frequency with which the printhead fires (within the manufacturer-defined operating range) and the printing speed of the piece (in m/min). Thus, with the same printed dot size, a greater longitudinal resolution implies that a greater weight of ink is applied per surface unit.

Chromaticity In colour systems such as CIE 1976 L*a*b*, the chromaticity or purity of a colour is defined as the radial component of its a* and b* colour parameters, that is:

$$C^* = \sqrt{a^{*2} + b^{*2}} \quad (2)$$

Crystalline substance. It is a homogeneous solid (i.e. one that cannot be physically divided into simple chemical components), with a defined (although generally not fixed) chemical composition and which has an ordered arrangement of atoms (crystalline structure). It may be of natural origin (in this case called mineral) or of synthetic origin.

Glass-ceramic. A glass-ceramic material can be defined as a polycrystalline solid that contains a residual glassy-type phase that has been obtained through controlled crystallisation, during a thermal process, based on an original glaze. This type of material is of particular interest as it enables the special properties of crystalline substances to be combined with the characteristics of glass or, in this case, a glaze coating.

Opacity/turbidity
In a phase system, as is the case of glass-ceramics or glazes with embedded crystalline substances, opacity or turbidity is due, amongst other factors, to the difference between the refractive index of the nanometric crystals which are present and that of the glass matrix containing them. When the diameter of the particles is greater than the incident wavelength, a series of successive reflections and refractions take place in multiple directions, giving rise to a turbid or opal appearance. This effect is explained by the Mie theory. When the size of the particles is smaller than the wavelength of the light, the intensity of the dispersed light can be calculated by Rayleigh's equation (3):

$$I = \frac{\pi N V^2}{r^2 \lambda^4} \left(\frac{\Delta n}{n_0}\right)^2 (1 + cos^2\beta) \quad (3)$$

Where N is the number of particles, V their volume, r the distance to the particle, $\lambda$ the wavelength of the light, $n_0$ is the refractive index of the glaze, $\Delta n$ the difference between the refractive index of the glaze and that of the crystalline phase and $\beta$ the angle of incidence of the light.

Based on this theory, and with a practical application in the case of glass-ceramics, simplified equations have been proposed, such as that of R.W. Hopper [Journal of Non-Crystalline Solids 70, 111 (1985)] who defines an index of turbidity ($\tau$) of glass-ceramic materials based on the equation (4):

$$\tau \cong 6.63 \cdot 10^{-4} \left(\frac{\Delta n}{\bar{n}}\right)^2 k^4 L^3 \quad (4)$$

where k is the incident light wave vector ($k = 2\pi/\lambda$), $\bar{n}$ is the refractive index of the medium, $\Delta n$ is the difference between the refractive index of the glaze and the crystalline phase, and L is the mean distance between phases.

Given that, in general, the glazes used to decorate ceramic tiles have low refractive indexes, n, (normally between 1.50 and 1.70), the higher the refractive index of the dispersed crystalline substance is, the greater the opacity obtained will be (examples of crystalline substances that favour opacity are zircon [n=1.92 - 1.97], anatase [2.52 - 2.53] and tin oxide [2.00 - 2.09]). On the other hand, the lower the refractive index of the crystalline substance is (more similar to that of the glaze), the greater the transparency obtained will be.

### Sintering temperature.

Sintering is defined as the heat treatment process by which a system of individual particles (or grains) that form a piece or porous body evolve to a state of maximum compaction and minimum porosity. During this process different chemical and physical transformations may take place, with micro-structural changes in the piece, giving rise to the formation of new crystalline or glassy phases. This process depends on several factors, the most important being the temperature of the heat treatment and the reaction time. A characteristic sintering temperature can be established for each raw material composition by determining the contraction curve of a test specimen of material when subjected to heat treatment with a fixed temperature ramp.

**Prior art**

The technique of tile decoration by digital printing using inkjet machines has become common practice as it is an economical, highly flexible process. It is usually employed to decorate ceramic tiles by applying pigmented inks, which afford the tiles their colour once they are fired. At present, it is extremely easy to apply a design to a ceramic tile. Using image editing software almost any imaginable design can be quickly and easily exported to any of the different ceramic digital printing machines that exist in the market and replicated in the form of ceramic tiles, with excellent quality and repeatability.

Initially, the inks used for inkjet decorating of ceramic tiles were soluble salts of metal cations dissolved in organic solvents of different types (mineral oils, glycols, esters etc.), normally of an apolar, non-conductive nature in order to prevent problems with short-circuits in the heads, such as those referred to in EP 1272574 *"Individual inks and set of inks for use in colour inkjet printing of glazed ceramic articles and surfaces"*. However, given that these inks are applied on to unfired glazes, that is to say, porous substrates, the use of soluble salts caused a serious problem of printing reproducibility due to the difficulty of controlling penetration of the inks into the substrate.

This problem of uncontrolled ink penetration was later minimized when soluble salts were replaced by solid pigments of a ceramic nature, with a crystalline structure, which penetrate porous substrates much less easily than soluble salts do. Thus, suspensions of pigments in solvent media are prepared, which are subsequently milled to obtain a particle size distribution (PSD) that is small enough to be used in the printheads that are commonly employed in ceramics. In general, the specifications for most printheads (determined by the diameter of the injectors) require the use of inks with a PSD of solids with an upper bound limitation. Most printheads restrict use to inks with D97<1$\mu$m and there are only a few printheads whose limit for inks is D97<3$\mu$m.

However, it is not only important to limit the upper bound of the PSD of ink suspensions. It is also essential to prevent the formation of an excess of fine grains of pigment since, because the specific surface area of the solid varies in a ratio that is inversely proportional to the diameter of the particles, when the specific surface area increases excessively, a re-aggregation of particles may occur. Thus, having inks with a PSD of a very small width improves their stability over time (by preventing re-aggregation) and allows higher concentrations of pigment to be reached.

Different procedures related to ceramic ink printing can be found in the prior art, such as, for example, Patent ES2131466 *"Automatic procedure for decorating ceramic substrates"*, which describes in general terms the use of the inkjet system in ceramics and also in Patent ES2289916 *"Colloidal dispersion of ceramic pigments"*, which presents, in a very general way, the manufacture of inks for inkjet application. These procedures and inks only afford finishes in different colours by injection.

Interestingly, replacing the early soluble salt inks with the new inks based on ceramic pigments because they resolve the stability problems of the former inks, has given rise to a new problem which is precisely due to their limited penetrability: when the new pigmented inks are applied to ceramic tiles, they are confined to a very superficial layer of the substrate and hence are very exposed to the abrasion of the tiles, which is especially serious if the tiles are used as ceramic paving because they suffer premature wear and the design can quickly lose its original appearance.

Traditionally, when coloured inks were applied using techniques such as screen printing or rotogravure (among others), the solution to this consisted of applying a transparent, normally matt, coating to them, which (depending on the weight applied) provided adequate protection for use. This top layer could be applied using traditional techniques such as airbrushing, screen printing, rotogravure or full-field crushed frit coating. However, all of these traditional techniques involve the same problems which led to the practical disappearance of the use of coloured inks: high consumption (higher cost) and minimal flexibility of use (slow, tedious changeovers). It is hence a real challenge to provide tiles with extra protection using modern digital technology and to stop wear from use. The invention disclosed in this description solves this serious drawback, presenting a new material of a crystalline structure, which can be used as an ink, affording tiles a ceramic coating with a transparent matt appearance that protects the coloured inks responsible for the design, thus minimising their wear.

Traditionally, the ceramic glazes used to obtain the aforementioned matt coatings, both for decorating tiles and other ceramic objects, basically consisted of mixes of raw materials that provided oxides, which, in suitable proportions, react together during the firing cycles, giving rise to the emergence of crystalline substances in glazes, whose hardness and resistance to abrasion is, in general, much greater than that of pure glazes. Due precisely to the need for an adequate chemical reaction between the raw materials, these firing cycles were always a lengthy process, taking up to 24 hours or even more.

The onset of quick-firing roller kilns brought about a revolution in the manufacture of ceramic tiles, including the decoration and glazing of these products. With very short firing cycles of between 25 and 60 minutes cold to cold, now there are just a few minutes for fusion and reaction of the raw materials in order to obtain a homogeneous, flawless glaze.

This was the reason why the massive introduction of roller kilns led to widespread use of the so-called ceramic frits, which are combinations of oxides prepared by mixing raw materials, melted at very high temperatures (even higher than 1500 °C) and cooled by thermal shock in water (the so-called sintering process), which causes them to break into grains of glass that, for the most part, are less than 1 cm in size. Frits obtained in this way can be advantageously used for the manufacture of vitreous glazes as their reaction during firing is much quicker than that of glazes formed only by mixed raw materials, with makes them ideal for use in the quick-firing cycles of roller kilns. There is an infinite number of possible chemical compositions of frits in which the basic oxide is $SiO_2$ (as the glass former), in combination with other oxides: fluxes, network modifiers and other inputs that allow devitrification of crystalline phases during the current short firing cycles of tiles and other ceramic products, producing excellent glazes with a matt appearance.

Although in totally orthodox terms, these matt glazes cannot be considered to be glass-ceramic products (because generally a majority proportion of crystalline phases is not obtained), in tile decoration ceramics the term **glass-ceramic glazes** tends to be used when there is a large presence of crystalline phases embedded in the vitreous matrix and these endow the glassy coating with fundamental properties. Hence, for decades we have known of different types of materials with these characteristics, such as:

-    Glazes characterised by the presence of a crystalline phase of a very small size and with a high refractive index, which gives them an opaque appearance, as is the case of zircon, tin or anatase glazes.

-    Glazes in which the devitrified crystalline phase produces a matt surface as it causes diffused reflectance of the incident light due to the large relative size of the crystals. Within this group of ceramic glazes there is a wide range of possibilities depending on the devitrified crystalline substance, such as: willemite, wollastonite, anorthite, gahnite, cordierite, celsian, etc.

By extension, the term glass-crystalline coatings or glazes is commonly used when the crystalline phase is not produced by devitrification inside the original glaze during thermal treatment, but rather is added to the composition as a separate crystalline substance (either natural or synthetic), and remains in the glaze, without dissolving, during thermal treatment. This is the case, for example, of glass ceramic coatings to which corundum has been added, endowing glazes with a special resistance to abrasion.

The property of hardness and resistance to abrasion is precisely one which is particularly useful when formulating coatings with crystalline phases, whether these are of a glass-ceramic nature (by devitrification) or glass-crystalline nature (with crystalline substances added to the glaze formulation).

Recently, matt finishes obtained in ceramics using injection inks have been associated with the use of frits as precursors of the devitrification of crystalline phases, as is the case described in patent US2013/0265376 *"Inkjet compositions for forming functional glaze coatings",* which employs matt frits of $SiO_2$, $Al_2O_3$ and MgO or CN103224736 *"Matte glaze ink for ceramic jet printing and preparation method thereof'* which describes inks for injection printing based on glazes formulated with raw materials that provide the oxides $SiO_2$, $Al_2O_3$, $K_2O$, $Na_2O$, CaO, MgO, ZnO and BaO.

Also, in WO2014/072553 *"Digital glaze composition for ink jet",* mixtures of raw materials and/or frits with a particle size of less than 1.2 $\mu$m expressed as D100 and less than 1 $\mu$m expressed as D90 are used. This patent cites a specific example of a digital glaze ink that provides a matt effect which, in the three embodiment examples, contains, as its main inorganic component, barium sulfate, sodium feldspar, alumina and frits termed 1 and 2, whose exact chemical composition is not mentioned, although they are said to respectively contain the following elements:

Frit 1: Si, Zn, Ca

Frit 2: Si, Al, B, Zr

Furthermore, numerous raw materials are also mentioned in the patent, expressly indicating that the raw materials are employed as glaze formers and that there are no inorganic pigments in their composition. In no case is the use of pure ceramic materials of a crystalline structure mentioned.

On the other hand, it is difficult to manufacture inks based on frits because of the very nature of the frits, which complicates milling and does not allow a sufficiently fine PSD to be obtained to use them in many of the printheads that are normally used in the manufacture of tiles or other decorated ceramic objects. In fact, the patent cites a value of D90 < 1 $\mu$m, which indicates that 10% of the particles are over 1 $\mu$m, restricting their use in some types of the printheads commonly used for inkjet ceramic decoration.

However, in all of the cases mentioned, the use of the said matt inks has the sole object of producing the aesthetic effect of the contrast in lustre between decorated and undecorated zones and none of them contemplate a solution to the problem of the poor resistance to abrasion in zones decorated with coloured inks nor of the transparency of coatings.

Document CN 105 254 339 A discloses a protective layer of enamel which is applied onto ceramic substrates and is partly fixed by a laser so that the non-fixed part can be removed with an abrasive. Document KR 2003 0050568 A discloses a lower plate of a plasma display panel comprising a substrate containing a mixture of $ZrO_2$, $Al_2O_3$ and spinel on which an electrode is applied by inkjet. The electrode is coated by a dielectric protective layer.

**Description of the invention**

Responding to this challenge and faced with the fact that there is a lack of inks designed to protect against abrasion of the decoration on ceramic tiles, the current invention relates to a ceramic ink having the features of claim 1. Advantageous embodiments are described in the dependent claims. The solid component of the ink being a colourless material of a crystalline nature, formed by a combination of oxides, hereafter known as **crystalline substance.** This crystalline substance, which is a fundamental component of the ink, is selected from among all the possible crystalline substances (whether of natural or synthetic origin) that are basically characterised by having a low refractive index and a high Mohs hardness.

The ink comprises a crystalline substance in a proportion of between 25% and 60% by weight, one or several dispersants in a proportion of between 1% and 15% by weight, and a solvent part, in a proportion of between 25% and 74% by weight.

The ink of the invention is, in turn, used to obtain coatings of a glass-crystalline nature with abrasion resistance and transparency properties when it is used in a process of decorating ceramic objects which consists of the following phases:

- Conventional glazing of the ceramic product

- Decoration with coloured inks (design input)

- Inkjet printing using the ink of the invention.

- Completion with a conventional firing process.

The crystalline substance that forms the solid part of the ink must, as indicated, have a low refractive index, equal to or lower than n= 1.70, preferably lower than n=1.65 and in particular preferably lower than n=1.60 , in order to achieve maximum possible transparency. Furthermore, it is important that it has a high Mohs hardness, preferably equal to or greater than 5.5 and, in particular, preferably equal to or greater than 6.5, to endow it with a protective capacity against the surface abrasion of decorated tiles.

Optionally, the said crystalline substances can also be obtained by means of thermal treatment, from the raw materials that provide the oxides in the proportions indicated by their chemical formula.

In particular, the crystalline substance is comprised of, as essential oxides, $SiO_2$, $Al_2O_3$ and $Li_2O$, which can be incorporated in the composition from the raw materials available in the market. The said ceramic material is furthermore characterised in that after thermal treatment it acquires a eucryptite crystalline structure ($Li_2O \cdot Al_2O_3 \cdot 2SiO_2$).

## Advantages of the invention

The incorporation as a coating of the decoration of tiles or other ceramic products, in the form of an inkjet ink, of a crystalline substance of submicronic size, non-soluble in the glaze, endowing the end product with great mechanical resistance to abrasion. It should be taken into account that the hardness of the crystals used is preferably equal to or greater than 5.5 on the Mohs scale. Furthermore, the refractive index is very low (preferably less than n=1.65), being within the range of refractive indexes of glazes usually used as ceramic coatings, so that it provides very good transparency (recalling that this transparency will be higher, the lower the difference between both refractive indexes is).

Another additional advantage of the invention is the spectacular reduction in the milling time of the ink obtained due to the use of a pure ceramic material (crystalline substance) rather than a frit (of a glassy nature) designed to devitrify crystalline substances. This reduction in time means that a narrower PSD can be obtained, that is, one with less width value, obtaining D97 values that are considerably less than 0.9 $\mu$m. This fact prevents the tendency of the ink to re-aggregate, the caking of the solid component and considerably improves its filtering capacity (which can be determined as the filtering speed (ink flow), at a certain pressure, usually 2.5 bar, through a standard Teflon filter with a pore diameter of 5 $\mu$m) and it allows it to be used in printheads requiring inks under 1 $\mu$m.

Therefore, with the new ink of the invention, the state of the art is improved by overcoming the technical problem of the difficulty of milling frit-based ink, while improving milling efficiency, reducing the time required to reach the target PSD, and reducing the viscosity of the ink, enabling the concentration of solids in the ink to be increased and optimizing the end result. Furthermore, it must be taken into account that compared to a matt frit that can only devitrify part of the oxide composition, the inks of the invention provide practically 100% yield in the crystalline phase of low refractive index and high hardness, always bearing in mind the purity of the raw materials used.

It is also important to highlight the undeniable advantage, as can be seen in the decoration process, that the protective ink is applied simultaneously with the other inks in one print pass, using the same multiple printhead ink injection device and without requiring any further operations or any more machinery or processing time.

## Description of the figures

Figure 1 shows a working diagram that corresponds to example 1 (1) and example 2 (2) of the invention, indicating the raw materials (3), mixing (4), thermal treatment (5), milling, drying and micronising (6) and ink milling (7).

Figures 2(a), 2(b) and 2(c) show a comparison between the diffractograms of the raw materials of material Z1 prior to synthesis by calcination (figure 2(a)) and following thermal treatment carried out on test specimens C1 (figure 2(b)) and C2 (figure 2(c)). The extremely high concentration of eucryptite crystals in figure 2(b) with a reaction yield of 98.3% is noteworthy.

Figure 3 shows a graph of the evolution in the PSD (D97) of the ink, T1, tested in relation to the specific work consumed in milling with the ceramic material C1.

Figure 4 shows the result of the abrasion test, according to UNE standards, for the tiles treated with the matt ink (Group T) and the untreated tiles (Group R).

**Preferred embodiment of the invention**

This invention relates to a transparent matt ink for protecting ceramic coatings, essentially determined by the fact that its solid component is a colourless material of a crystalline nature, hereafter known as crystalline substance, which may be of natural or synthetic origin, basically characterised by its low refractive index and high Mohs hardness.

The ink of the invention comprises a solid part, corresponding to the crystalline substance, one or several dispersants, and a solvent part, in which the solvents are selected from among the following groups: glycols, mineral oils (hydrocarbons) and carboxylic esters, according to the following composition, expressed in % by weight, 0:

**Table 1. Range of ink compositions**

| Component | % (by weight) |
|---|---|
| Crystalline substance (natural or synthetic) | 25 - 60 |
| Dispersant(s) | 1 - 15 |
| Solvents | 25 - 74 |

The crystalline substances, whether of natural or synthetic origin, that form the solid part of the ink are characterised by:

- The refractive index must be equal to or less than n=1.70, preferably less than n=1.65 and, in particular preferably less than n=1.60.
- The Mohs hardness must be equal to or higher than 5.5 and preferably equal to or higher than 6.5.

Taking into account these requirements, the solid part that comprises the ink of this invention is selected from among the different mineral raw materials or synthetic products available in the market, which endow the crystalline substances with appropriate properties. Optionally, the said crystalline substances can also be obtained by means of thermal treatment, from the raw materials that provide the oxides in the proportions indicated by their chemical formula. Table 2 indicates, in a non-exclusive manner, some of the crystalline substances that can be used as the solid part of the inks of this invention.

**Table 2. Some crystalline substances that can be used to manufacture the ink**

| Crystalline phase | Chemical formula | Hardness (Mohs) | Refractive index (n) |
|---|---|---|---|
| Akermanite | $2CaO \cdot MgO \cdot 2SiO_2$ | 5-6 | 1.61 |
| Albite | $Na_2O \cdot Al_2O_3 \cdot 6SiO_2$ | 6 - 6.5 | 1.527, 1.531, 1.538 |
| Andalusite | $Al_2O_3 \cdot SiO_2$ | 6.5 - 7.5 | 1.629 - 1.640 <br> 1.638 - 1.650 |
| Anorthite | $CaO \cdot Al_2O_3 \cdot 2SiO_2$ | 6 | 1.57 |
| Celsian | $BaO \cdot Al_2O_3 \cdot 2SiO_2$ | 6 - 6.5 | 1.579 - 1.587 <br> 1.583 - 1.593 <br> 1.588 - 1.600 |
| Cordierite | $2MgO \cdot 2Al_2O_3 \cdot 5SiO_2$ | 7 | 1.51 - 1.57 |
| Diopside | $CaO \cdot MgO \cdot SiO_2$ | 6 | 1.67 - 1.73 |
| Spodumene | $Li_2O \cdot Al_2O_3 \cdot 4SiO_2$ | 6.5 - 7 | 1.67 - 1.69 |
| Eucryptite | $Li_2O \cdot Al_2O_3 \cdot 2SiO_2$ | 6.5 | 1.570 - 1.573 <br> 1.583 - 1.587 |
| Forsterite | $2MgO \cdot SiO_2$ | 7 | 1.635, 1.651, 1.670 |
| Leucite | $K_2O \cdot Al_2O_3 \cdot 4SiO_2$ | 5.5 - 6 | 1.508 - 1.511 |

(continued)

| Crystalline phase | Chemical formula | Hardness (Mohs) | Refractive index (n) |
|---|---|---|---|
| Mullite | $3Al_2O_3 \cdot 2SiO_2$ | 6 - 7 | 1.62 - 1.66 |
| Orthoclase | $K_2O \cdot Al_2O_3 \cdot 6SiO_2$ | 6 - 6.5 | 1.518 - 1.529<br>1.522 - 1.533<br>1.522 - 1.539 |
| Petalite | $Li_2O \cdot Al_2O_3 \cdot 8SiO_2$ | 6.5 | 1.504 - 1.507<br>1.510 - 1.513<br>1.516 - 1.523 |
| Willemite | $2ZnO \cdot SiO_2$ | 5.5 | 1.67 - 1.73 |

In a particular embodiment, the optimal crystalline substance for the manufacture of the ink of the invention is a ceramic material obtained as a ceramic synthesis material by heat treatment, based on a certain chemical composition that comprises $SiO_2$, $Al_2O_3$ and $Li_2O$ in its formulation, as essential oxides, which can be incorporated into the composition based on the raw materials available in the market. The said ceramic material is furthermore characterised in that after thermal treatment it acquires a eucryptite crystalline structure ($Li_2O \cdot Al_2O_3 \cdot 2SiO_2$). In addition to these essential oxides, the eucryptite crystalline structure can contain other elements to replace the silicon, incorporated as network modifiers. The composition ranges are those that are derived from the formula (5) expressed in moles.

$$Li_2O \cdot Al_2O_3 \cdot (2-x-y)SiO_2 - xCeO_2 - yTiO_2 \qquad (5)$$

where:

x is between 0.00 and 0.20,

y is between 0.00 and 0.20.

Logically, as this is an industrial product, its composition may contain other minority oxides in a mole proportion that is always under 0.10, expressed in relation to the formula (5).

The said ceramic material of this invention, used for the manufacture of ink, is characterised furthermore by the fact that it is prepared by thermal treatment in a firing cycle with a minimum temperature of between 1,000 and 1,300 °C and remains at the highest temperature for between 1 and 8 hours, after which it acquires eucryptite crystalline structure ($Li_2O \cdot Al_2O_3 \cdot 2SiO_2$) For this purpose, the raw material composition prepared according to the previous formula (5) firstly undergoes a process of mixing and subsequently calcination by a conventional ceramic process, in accordance with the previously described firing cycle, resulting in eucryptite crystallisation being mainly obtained. The calcination temperature (maximum temperature of the firing cycle) is established according to the sintering temperature, determined by means of a melting point test.

Preparation of the ink of this invention was carried out by a process of milling the suspensions prepared, as indicated in table 1. In this regard it has been found that, in comparison to the behaviour of other state-of-the-art inks prepared by milling matt frits, the use in this invention of crystalline materials rather than glassy materials, means that the ink is much easier to mill and much finer particle size distributions (PSD) can be obtained than those achieved using matt frits.

Thus, compared to inks prepared by milling frits, in which a value of D90 < 1μm is observed (which means they can contain up to 10% of particles above 1μm), the ink obtained according to this invention, based on a ceramic material of crystalline structure, affords values of D97 < 0.90 μm, which practically guarantees the total absence of particles above 1μm.

Finally, the ink of the invention allows a coating of a glass-crystalline nature to be obtained, with abrasion resistance and transparency properties when it is used in a process of decoration of ceramic objects, which consists of the following phases:

- Conventional glazing of the ceramic product.

- Usual decorating with coloured inks to produce the tile design.

- Inkjet printing (by ink injection) using the ink that is the object of the invention, which can be carried out using any type injection printhead of those usually employed in ceramic decoration (unlike other inks prepared from frits which do not have a particle size distribution that is as fine as that of the ink of the invention).

- Ending with a conventional firing process, which may range from traditional double firing at 900°C to high-temperature porcelain stoneware firing at 1,300 °C.

With regard to the final properties, it was found that (due to the high coefficient of hardness of the crystalline substances selected as the solid component of the ink), resistance to abrasion is improved in tiles decorated with the inks of the invention, while at the same time preserving the original colours and design thanks to the high degree of transparency of the ink (due to the low refractive index of the crystalline substance used).

A person skilled in the art will easily comprehend that the characteristics of different embodiments can be combined with the characteristics of other possible embodiments, provided that the combination is technically possible.

## Examples

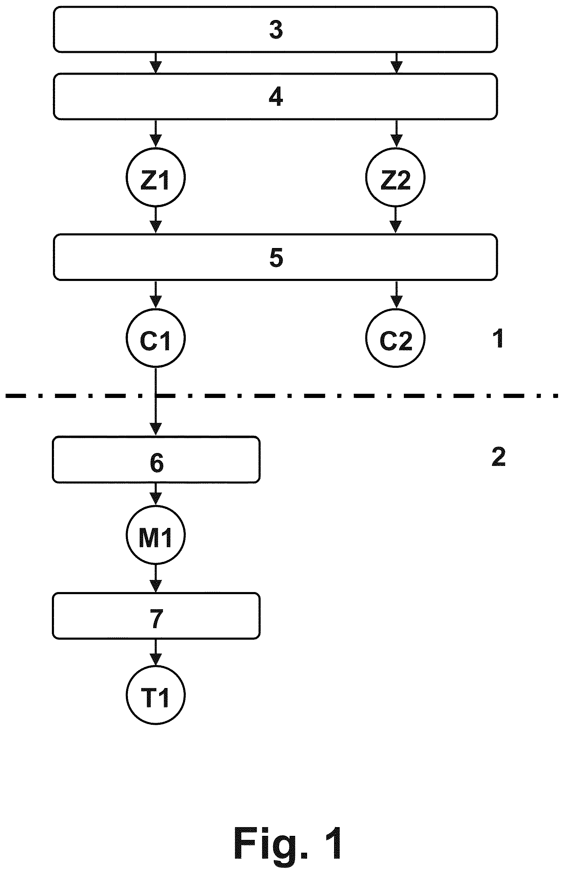

Figure 1 shows a process outline, followed in examples 1 and 2.

### Example 1. Synthesis of a ceramic material with eucryptite structure.

Using mixtures of the raw materials: amorphous silicon oxide, lithium carbonate, aluminium hydroxide and cerium carbonate (selected from among different alternatives that provide the oxides $SiO_2$, $Li_2O$ and $Al_2O_3$ and $CeO_2$), mixtures Z1 and Z2 were prepared with the chemical compositions indicated in Table 3, expressed in moles, based on which the x,y coefficients were determined according to the formula (5).

Mixtures Z1 and Z2 were synthesised in a calcination cycle at a maximum temperature of 1,250 °C with a dwell time of 2 hours at maximum temperature, giving rise to the C1 and C2 ceramic materials whose final chemical composition, expressed in moles, is shown in table 3.

**Table 3. Chemical composition, in moles, of ceramic materials C1 and C2**

|  | Nominal Eucryptite | C1 | C2 |
|---|---|---|---|
| $SiO_2$ | 2.000 | 1.992 | 1.992 |
| $CeO_2$ | - | 0.000 | 0.004 |
| $Al_2O_3$ | 1.000 | 0.998 | 0.998 |
| $Li_2O$ | 1.000 | 0.992 | 0.992 |
| $Na_2O$ | - | 0.006 | 0.006 |
| $CaO$ | - | 0.002 | 0.002 |
| x | - | 0.000 | 0.004 |
| y | - | 0.000 | 0.000 |

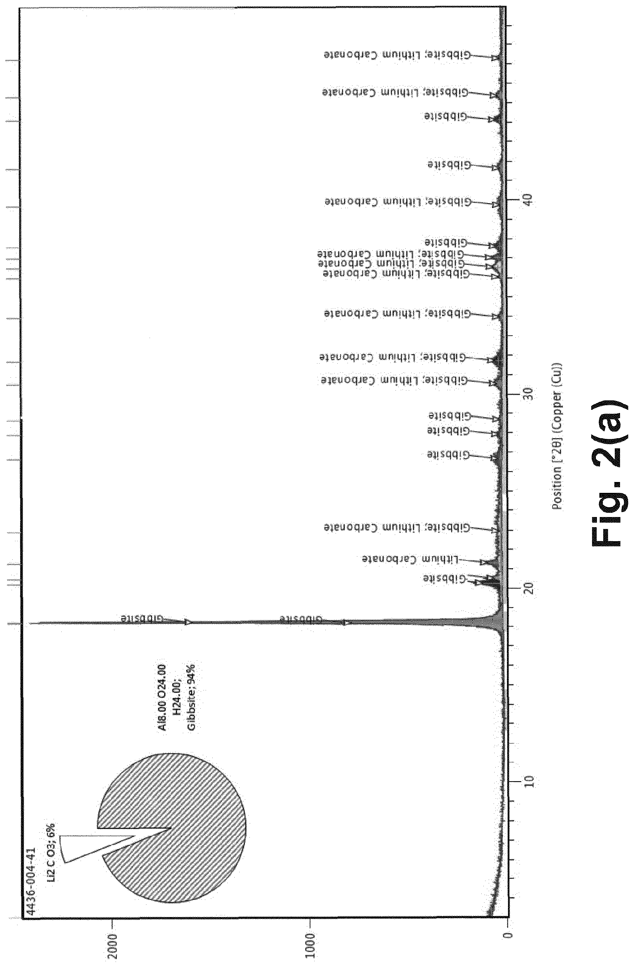

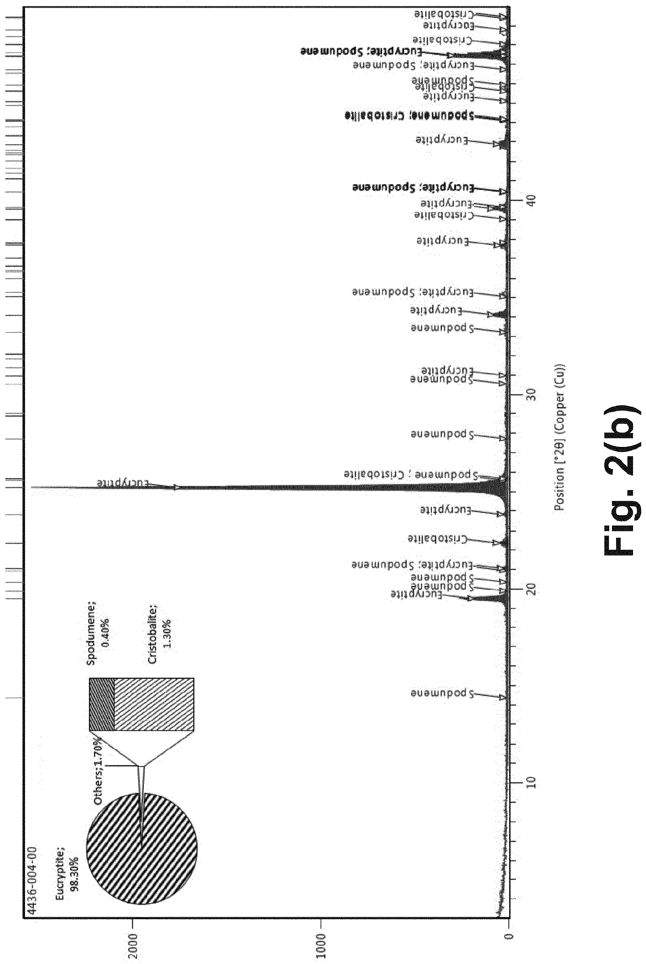

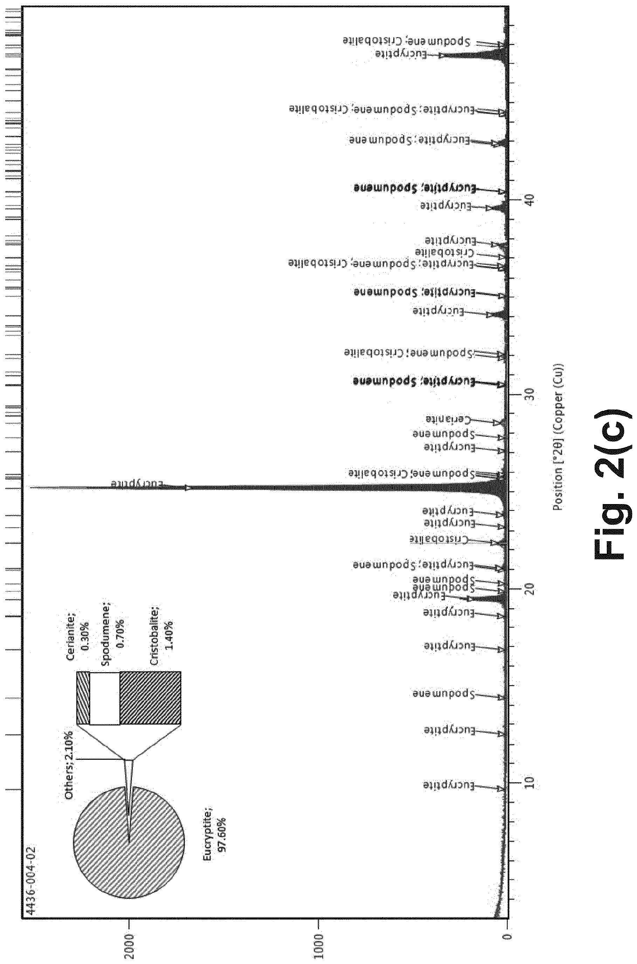

In order to verify the crystallinity, both the mixture of uncalcined raw materials of composition Z1, figure 2(a) and the already calcined products C1, figure 2(b) and C2, figure 2 (c) were characterised by X-ray diffraction (XRD) In the said figures, it is observed that:

- The majority crystalline substance in the uncalcined mixture, figure 2(a) is gibbsite, $Al(OH)_3$, as corresponds to the majority raw material used (aluminium hydroxide).
- Both in figure 2(b) and in figure 2(c), eucryptite appears as the majority crystalline substance, with yields of 98.3% and 97.6% respectively, indicating that in both ceramic materials, C1 and C2, synthesizing of practically pure eucryptite has been achieved.
- Given that the eucryptite yield of ceramic material C1 was greater than that of C2, the former was chosen to prepare the digital ceramic ink (example 2).

**Example 2. Preparation and use of ink from the ceramic material C1, of example 1, with eucryptite structure.**

Prior to being milled as ink, the ceramic material obtained by calcination, C1, was wet-milled in water to a PSD with D90 < 15 μm, followed by drying and micronizing to yield a powdery product, M1, apt for incorporating in the milling of the ink. Using this calcined, milled, dried and micronized ceramic material, M1, milling was prepared in a continuous mill with recirculation using 0.3 - 0.4 mm diameter Ce-Y balls, according to the chemical composition expressed by weight in Table 4, yielding an ink, T1, apt for use in printheads that are regularly used for the decoration of ceramic tiles.

**Table 4. Formula of T1 ink**

| Component | Weight (g) |
|---|---|
| M1 | 45 |
| Dispersant(s) | 10 |
| Solvent(s) | 45 |

Milling data were recorded in terms of time, both of the PSD (D97 [μm]) and of the specific energy consumption in relation to the weight of milled pigment (W/M [kWh/kg]).

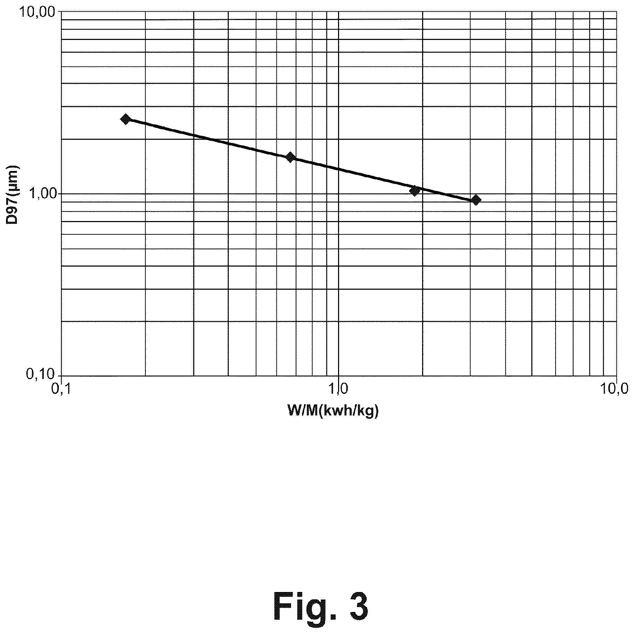

The graph in figure 3 shows that in the milling process carried out, the objective of D97 <1 μm can be easily achieved with a specific consumption of 3.2 kWh/kg of solid.

To verify the protective effect of the ink, 12 porcelain stoneware ceramic paving tiles were prepared, cut into a 12 x 22 cm format and glazed with a matt white glaze with an appropriate composition for the use, with a weight of approximately 600 g/m². Following this, a typical design simulating grey marble was applied to the tiles using a range of standard coloured inks (with DIMATIX SG 1024 M printheads).

Finally, the protective ink T1 was applied to 6 of the tiles with a resolution such that the weight of the applied ink was 28.8 g/m² and the group was assigned the reference T. The remaining 6 tiles were left without protection and referenced as group R.

After firing the 12 tiles in a standard single-firing cycle for porcelain stoneware at 1,200 °C, the pieces were subjected to abrasion testing according to the international UNE-EN ISO 10545-7 standard: "Determination of resistance to surface abrasion for glazed tiles". The abrasion resistance test consisted of subjecting the tile to a certain number of revolutions with an abrasive material, attacking a circular zone in the centre of the tile. Classification of the tiles is carried out using Table 5.

**Table 5. Classification of tiles according to the UNE-EN ISO 10545-7 standard**

| Abrasion stage; Visible defect at revolutions | Class |
|---|---|
| 100 | 0 |
| 150 | 1 |
| 600 | 2 |
| 750, 1500 | 3 |
| 2100,6000, 12000 | 4 |
| >12000[(1)] | 5 |
| (1) Must pass the "resistance to stains" test indicated in ISO 10545-14 | |

In the test in the example, the number of revolutions was gradually increased in line with the specific values indicated in table 6 until a change in appearance occurred, under the observing conditions indicated in the standard.

**Table 6. Tile abrasion tests**

| No. of revolutions | Group R | Group T |
|---|---|---|
| 600 | No visible effect | No visible effect |
| 750 | A change in appearance is sensed | No visible effect |
| 1500 | **Visible effect** | No visible effect |

(continued)

| No. of revolutions | Group R | Group T |
|---|---|---|
| 2100 | - | A change in appearance is sensed |
| 6000 | - | **Visible effect** |
| 12000 | - | - |

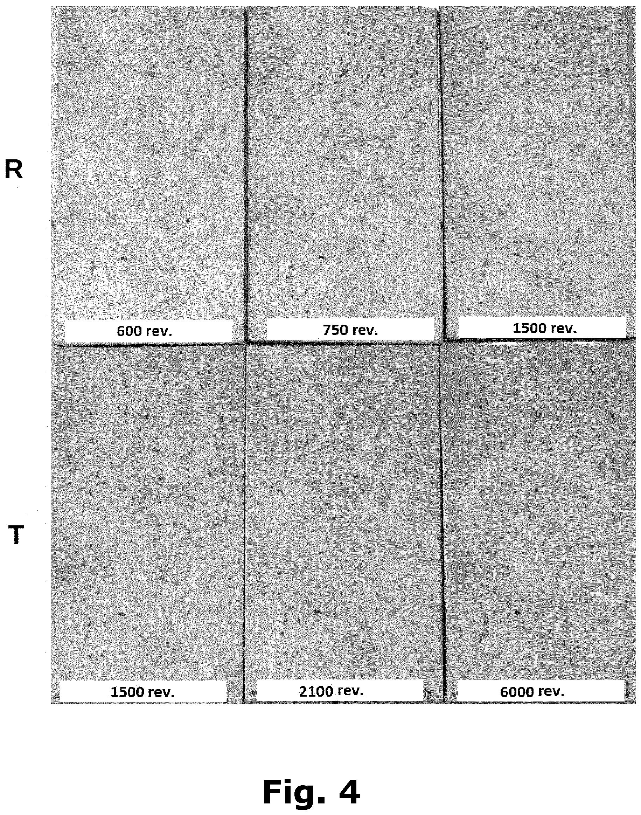

As can be seen in table 6, there is a notable increase in resistance to abrasion. In the Group R tiles, the effect is clearly visible at 1500 revolutions (therefore the experiment is stopped) and, in line with table 5, they are recorded as CLASS 3. However, in the Group T tiles the effect is only clearly visible at 6000 revolutions and for this reason they are given a CLASS 4 classification. Comparing the tiles at close range, a minimal change in appearance is observed from 750 revolutions onwards in group R and from 2100 revolutions onwards in group T. The tiles in both groups can in fact be compared by pairs, observing a correlation in appearance of 1:3 in terms of the number of test revolutions. Thus, it can be concluded that the tiles treated with the transparent matt ink T1 withstand approximately three times more abrasive revolutions than the undecorated tiles, as observed in figure 4.

All of the information referring to examples or embodiments, including the tables, form part of the description of the invention.

## Claims

1. Transparent matt ink for the protection of ceramic coatings prepared by milling, using a ceramic material, **characterised in that** it comprises:

   a solid part in a proportion of between 25% and 60% by weight, corresponding to a crystalline substance having a refractive index equal to or lower than 1.70 and a hardness equal to or greater than 5.5 on the Mohs scale, one or several dispersants in a proportion of between 1% and 15% by weight, and
   a solvent part, in a proportion of between 25% and 74% by weight in which the solvents are selected from the group formed by glycols, mineral oils (hydrocarbons) and carboxylic esters.

2. Transparent matt ink for the protection of ceramic coatings, according to the preceding claim, **wherein** the refractive index of the crystalline substance is equal to or less than 1.65.

3. Transparent matt ink for the protection of ceramic coatings, according to the preceding claims, wherein the refractive index of the crystalline substance is equal to or less than 1.60.

4. Transparent matt ink for the protection of ceramic coatings, according to the preceding claims, **wherein** the Mohs hardness of the crystalline substance is equal to or greater than 6.5.

5. Transparent matt ink for the protection of ceramic coatings, according to the preceding claims, **wherein** the crystalline substance is selected from the group formed by akermanite, albite, andalusite, anorthite, celsian, cordierite, diopside, spodumene, eucryptite, forsterite, leucite, mullite, orthoclase, petalite and willemite.

6. Transparent matt ink for the protection of ceramic coatings, according to the preceding claims, **wherein** the crystalline substance is eucryptite.

7. Transparent matt ink for the protection of ceramic coatings, according to the preceding claims, **wherein** the crystalline substance is a ceramic material prepared by thermal synthesis treatment which comprises, in its composition, as essential elements, silicon oxide, aluminium oxide and lithium oxide, also being able to comprise other network-modifying oxides (titanium oxide and cerium oxide), which acquire a eucryptite crystalline structure and in which the incorporation of the chemical elements is carried out according to the formula, expressed in moles:

   $$Li_2O \cdot Al_2O_3 \cdot (2-x-y)SiO_2 \cdot xCeO_2 \cdot yTiO_2$$

   where:

x is between 0.00 and 0.20,
y is between 0.00 and 0.20.

8. Transparent matt ink for the protection of ceramic coatings, according to claim 7, **wherein** the ceramic material contains, in addition to the indicated oxides, other minority oxides in a mole proportion that is always lower than 0.10, expressed in relation to the total.


**Patentansprüche**

1. Transparente matte Tinte zum Schutz keramischer Beschichtungen, die durch Mahlen unter Verwendung eines keramischen Materials hergestellt sind, **dadurch gekennzeichnet, dass** sie folgendes aufweist:

   einen festen Teil in einem Anteil zwischen 25 Gew.-% und 60 Gew.-%, der einer kristallinen Substanz mit einem Brechungsindex gleich oder kleiner als 1,70 und einer Härte gleich oder größer als 5,5 auf der Mohs Skala entspricht,
   einem oder mehreren Dispergiermitteln in einem Anteil zwischen 1 Gew.-% und 15 Gew.-%, und
   einen Lösungsmittelteil in einem Anteil zwischen 25 Gew.-% und 74 Gew.-%, bei dem die Lösungsmittel aus der Gruppe der Glykole, Mineralöle (Kohlenwasserstoffe) und Carbonsäureester ausgewählt sind.

2. Transparente matte Tinte zum Schutz keramischer Beschichtungen nach dem vorstehenden Anspruch, wobei der Brechungsindex der kristallinen Substanz gleich oder kleiner als 1,65 ist.

3. Transparente matte Tinte zum Schutz keramischer Beschichtungen nach den vorhergehenden Ansprüchen, wobei der Brechungsindex der kristallinen Substanz gleich oder kleiner als 1,60 ist.

4. Transparente matte Tinte zum Schutz keramischer Beschichtungen nach den vorhergehenden Ansprüchen, wobei die Mohs-Härte der kristallinen Substanz gleich oder größer als 6,5 ist.

5. Transparente matte Tinte für den Schutz keramischer Beschichtungen nach den vorhergehenden Ansprüchen, wobei die kristalline Substanz aus der Gruppe ausgewählt ist, die aus Akermanit, Albit, Andalusit, Anorthit, Celsian, Cordierit, Diopsid, Spodumen, Eukryptit, Forsterit, Leucit, Mullit, Orthoklas, Petalit und Willemit gebildet wird.

6. Transparente matte Tinte zum Schutz keramischer Beschichtungen nach den vorstehenden Ansprüchen, wobei die kristalline Substanz Eukryptit ist.

7. Transparente matte Tinte zum Schutz keramischer Beschichtungen nach den vorhergehenden Ansprüchen, wobei die kristalline Substanz ein durch thermische Synthesebehandlung hergestelltes keramisches Material ist, das in seiner Zusammensetzung als wesentliche Elemente Siliciumoxid, Aluminiumoxid und Lithiumoxid enthält, das auch andere netzwerkmodifizierende Oxide (Titanoxid und Ceroxid) enthalten kann, die eine kristalline Eukryptitstruktur erhalten, und in dem die Verbindung der chemischen Elemente gemäß der Formel, ausgedrückt in Mol, durchgeführt wird:

$$Li_2O \cdot Al_2O_3 \cdot (2\text{-}x\text{-}y)SiO_2 \cdot xCeO_2 \cdot yTiO_2$$

   wobei:

   x zwischen 0,00 und 0,20 ist,
   y zwischen 0,00 und 0,20 ist.

8. Transparente, matte Tinte zum Schutz keramischer Beschichtungen nach Anspruch 7, wobei das keramische Material zusätzlich zu den angegebenen Oxiden andere Minoritätsoxide in einem Molanteil enthält, der immer niedriger als 0,10 ist, ausgedrückt im Verhältnis zur Gesamtmenge.


**Revendications**

1. Encre transparente matte pour la protection de revêtements céramiques préparée par broyage, ayant recours à un matériau céramique **caractérisée en ce qu'**elle comprend :

une part solide dans une proportion comprise en 25% et 60% en poids, correspondant à une substance cristalline avec un indice de réfraction égal ou inférieur à 1,70 et une dureté égale ou supérieure à 5,5 sur l'échelle Mohs, un ou plusieurs dispersants dans une proportion comprise en 1% et 15% en poids, et
une partie solvant dans une proportion comprise en 25% et 74% en poids, dans laquelle les solvants sont sélectionnés dans un groupe formé par les glycols, les huiles minérales (hydrocarbures) et les esters carboxyliques.

2. Encre transparente matte pour la protection de revêtements céramiques selon la Revendication précédente, **étant précisé que** l'indice de réfraction de la substance cristalline est égal ou inférieur à 1,65.

3. Encre transparente matte pour la protection de revêtements céramiques selon les Revendications précédentes, **étant précisé que** l'indice de réfraction de la substance cristalline est égal ou inférieur à 1,60.

4. Encre transparente matte pour la protection de revêtements céramiques selon les Revendications précédentes, **étant précisé que** la dureté Mohs de la substance cristalline est égale ou supérieure à 6,5.

5. Encre transparente matte pour la protection de revêtements céramiques selon les Revendications précédentes, **étant précisé que** la substance cristalline est sélectionnée dans un groupe formé par l'akermanite, l'albite, l'andalousite, l'anorthite, la celsiane, la cordiérite, le diopside, le spodumène, l'eucryptite, la forstérite, la leucite, la mullite, l'orthoclase, la pétalite et la willémite.

6. Encre transparente matte pour la protection de revêtements céramiques selon les Revendications précédentes, **étant précisé que** la substance cristalline est de l'eucryptite.

7. Encre transparente matte pour la protection de revêtements céramiques selon les Revendications précédentes, **étant précisé que** la substance cristalline est un matériau céramique préparé par un traitement par synthèse thermique qui comprend, dans sa composition, en tant qu'éléments essentiels, de l'oxyde de silicium, de l'oxyde d'aluminium et de l'oxyde de lithium, pouvant aussi comprendre d'autres oxydes modificateurs de réseau (oxyde de titane et oxyde de cérium), qui acquièrent une structure cristalline d'eucryptite et dans laquelle l'incorporation des éléments suivants est réalisée conformément à la formule, exprimée en mole :

$$Li_2O \cdot Al_2O_3 \cdot (2-x-y)SiO_2O \cdot xCeO_2 \cdot yTiO_2$$

où :

x est compris entre 0,00 et 0,20,
y est compris entre 0,00 et 0,20.

8. Encre transparente matte pour la protection de revêtements céramiques selon la Revendication 7, **étant précisé que** le matériau céramique comprend, en sus des oxydes indiqués, d'autres oxydes minoritaires, en proportion molaire qui est toujours inférieure à 0,10, exprimée par rapport au total.

Fig. 1

Fig. 2(a)

**Fig. 2(b)**

Fig. 2(c)

# Fig. 3

**R**

| 600 rev. | 750 rev. | 1500 rev. |

**T**

| 1500 rev. | 2100 rev. | 6000 rev. |

# Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1272574 A
- ES 2131466
- ES 2289916
- US 20130265376 A
- CN 103224736
- WO 2014072553 A
- CN 105254339 A
- KR 20030050568 A

**Non-patent literature cited in the description**

- **R.W. HOPPER.** *Journal of Non-Crystalline Solids,* 1985, vol. 70, 111